# DEMANDE DE BREVET EUROPEEN

(11) **EP 1 775 050 A1**
(43) Date de publication de la demande: **18.04.2007**
(21) Numéro de dépôt: 05109571.9
(22) Date de dépôt: 14.10.2005
(51) Int. Cl.: B23G 1/44, B23B 1/00, G04B 45/00, G04B 37/08

(54) **Ensemble de boîtes de montre**

(71) Demandeur: Bouille, Eric, 2068 Hauterive (CH)
(72) Inventeur: Bouille, Eric, 2068 Hauterive (CH)
(74) Mandataire: GLN

(57) **Abrégé**

L'invention concerne un ensemble de boîtes de montre comportant chacune une carrure (10) et un fond (12) définissant des surfaces d'appui (20, 36) respectives qui coopèrent l'une avec l'autre. Le fond (12) et la carrure (10) constituent l'un une vis (28) munie d'un filet hélicoïdal (30) et l'autre un écrou (16) muni d'une gorge hélicoïdale (18), ce filet (30) et cette gorge (18) formant des surfaces de contact hélicoïdales qui coopèrent l'une avec l'autre et définissent des hélices déterminées par leurs origines respectives correspondant à leur intersection avec les surfaces d'appui (20, 36). La carrure (10) et le fond (12) comportent, en outre, des axes de référence (A'A', A"A") destinés à occuper des positions relatives pré-définies fixes pour l'ensemble. Les origines des hélices sont confondues lorsque les axes de référence (A'A', A"A") occupent ces positions pré-définies.

## Description

La présente invention se rapporte au domaine de l'horlogerie. Elle concerne, plus particulièrement, un ensemble de boîtes de montre du type comportant une carrure et un fond orné d'un motif tel qu'un logo ou une inscription. L'invention concerne également un procédé de fabrication d'un tel ensemble.

Une boîte de montre est un objet fonctionnel et esthétique. Destinée à loger un mouvement, elle est généralement formée d'une carrure et d'un fond amovible permettant son ouverture afin d'accéder à ce mouvement. La décoration de la face extérieure du fond de la boîte par un logo, un dessin ou une inscription gravée ou étampée est fréquente pour des montres haut de gamme, dont les plus petits détails sont soignés. La gravure est réalisée par attaque chimique, après toutes les opérations mécaniques pratiquées sur le fond. L'étampage est, au contraire, effectué sur des plaques pleines, avant toute étape mécanique de formation du fond, en raison des forces importantes mises en jeu.

Le fond ainsi décoré est fixé à la carrure à l'aide de quatre vis, à cran, ou par vissage. Le choix du type de fixation dépend essentiellement de la géométrie de la carrure. La fixation par vissage, par exemple, est compatible uniquement avec une boîte à symétrie cylindrique, ou comportant un logement cylindrique. Cette dernière méthode est avantageuse car le résultat est discret et les risques de rayure du fond lors des opérations de fixation ou d'enlèvement sont limités. Toutefois, elle ne permet généralement pas de positionner angulairement le fond par rapport à la carrure. Lorsqu'un motif orne la surface extérieure du fond, il arrive alors qu'il soit mal orienté par rapport à la carrure. Il en résulte un manque d'esthétisme de la montre vue depuis son envers et un inconfort à lire une éventuelle inscription. De plus, au sein d'une série de boîtes ornées d'un même motif, les positions relatives de la carrure et du fond n'étant pas définies, chaque couple carrure-fond présente une orientation différente. Même en s'efforçant d'appairer au mieux les couples carrure-fond, l'interchangeabilité de ces pièces n'est pas parfaite.

La présente invention permet de remédier à cet inconvénient en proposant un ensemble de boîtes de montre munies d'un fond assemblé à la carrure par vissage, dont la position angulaire par rapport à la carrure, définie avec une grande précision, est identique quel que soit le fond et quelle que soit la carrure.

Plus précisément, l'invention concerne un ensemble de boîtes de montre comportant chacune une carrure et un fond définissant des surfaces d'appui respectives qui coopèrent l'une avec l'autre, ledit fond et ladite carrure constituant l'un une vis munie d'un filet hélicoïdal et l'autre un écrou muni d'une gorge hélicoïdale, ce filet et cette gorge formant des surfaces de contact hélicoïdales qui coopèrent l'une avec l'autre et définissent des hélices déterminées par leurs origines respectives correspondant à leur intersection avec les surfaces d'appui. Selon l'invention la carrure et le fond comportent, en outre, des axes de référence destinés à occuper des positions relatives pré-définies fixes pour l'ensemble. De plus lesdites origines sont confondues lorsque les axes occupent ces positions pré-définies.

L'invention concerne également un procédé de fabrication d'un tel ensemble de boîtes, qui comporte les principales étapes suivantes :
- se munir d'un ensemble de carrures intermédiaires comportant chacune une portion cylindrique, une surface d'appui et un organe de positionnement angulaire, et d'un ensemble de fonds intermédiaires comportant chacun une portion cylindrique, une surface d'appui et un organe de positionnement angulaire,
- définir, pour les carrures, un axe de référence et, pour les fonds, un axe de référence, les positions respectives de ces axes par rapport aux organes de positionnement étant déterminées et formant un angle pré-défini lorsque les boîtes sont fermées,
- former une gorge hélicoïdale dans les portions cylindriques des carrures, telle que la position angulaire, définie en référence à leurs axes, de son intersection, au moins virtuelle, avec les surfaces d'appui des carrures est identique pour toutes les carrures de l'ensemble, et
- former un filet hélicoïdal dans les portions cylindriques des fonds tel que la position angulaire, définie en référence à leurs axes, de son intersection, au moins virtuelle, avec les surfaces d'appui des fonds est identique pour tous les fonds de l'ensemble et de sorte que les axes de référence forment ledit angle pré-défini lorsque les boîtes sont fermées.

L'invention sera mieux comprise à la lecture de la description qui suit, faite en regard du dessin annexé dans lequel :
- la figure 1 est une vue en coupe d'une boîte de montre selon l'invention,
- la figure 2 illustre des éléments géométriques de référence d'une telle boîte de montre,
- les figures 3a et 3b sont des exemples de cette boîte vue de dessous,
- la figure 4 est une vue de face d'un fond intermédiaire, et
- les figures 5a et 5b sont des vues de faces de deux étapes du procédé de fabrication d'une boîte selon l'invention.

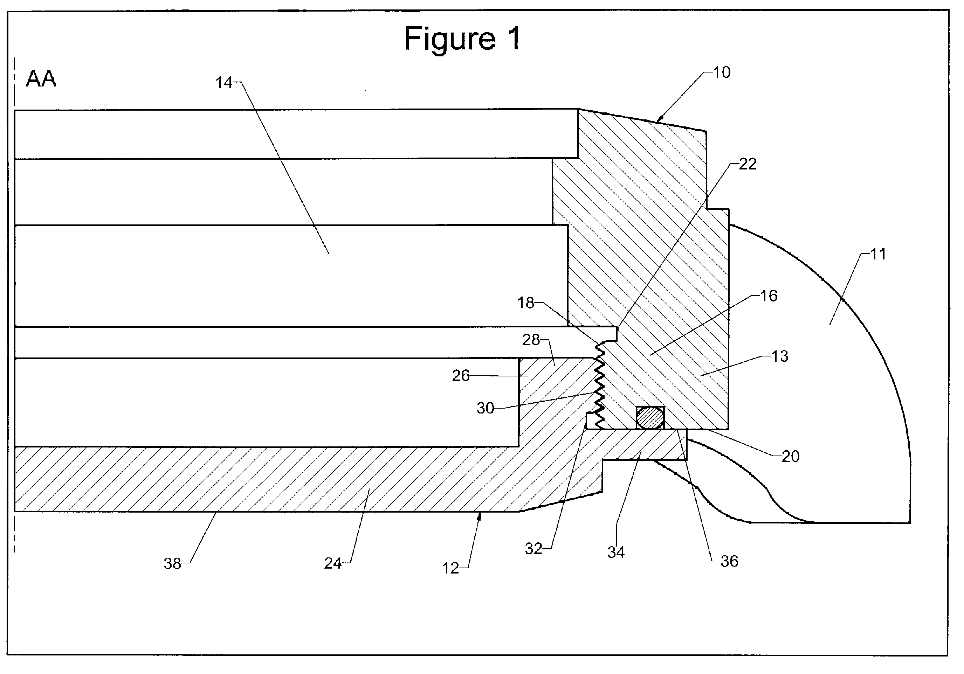

La boîte de montre représentée à la figure 1 comporte classiquement une carrure 10 munie de cornes 11 et un fond 12 formant ensemble un logement 14 destiné à recevoir un mouvement.

La carrure 10 est essentiellement cylindrique d'axe AA. Sa portion cylindrique inférieure 13 forme un écrou 16 comportant une gorge hélicoïdale 18 et une surface d'appui 20 s'étendant radialement et confondue avec la surface inférieure de la carrure 10. Une gorge circulaire 22 limite la gorge hélicoïdale 18 vers le haut.

Le fond 12 comporte une portion circulaire 24 sensiblement plate et une portion cylindrique 26 solidaire qui lui est concentrique. La portion cylindrique 26 forme une vis 28 comportant un filet hélicoïdal 30 limité, vers le bas, par une gorge circulaire 32. Un épaulement circulaire 34 s'étendant radialement directement sous la gorge 32 forme une surface d'appui 36. Un motif 38, non visible sur cette vue en coupe, est gravé sur la face inférieure de la portion circulaire 24.

Lorsque la boîte est fermée, la vis 28 est vissée dans l'écrou 16, et les surfaces d'appui 20 et 36 sont au contact l'une de l'autre, limitant ainsi la pénétration de la vis 28 dans l'écrou 16. La surface de contact entre la gorge et le filet hélicoïdaux 18 et 30 forme une hélice dont les intersections avec les surfaces d'appui 20 et 36 sont confondues, lorsque le fond 12 est vissé dans la carrure 10, en un segment de droite MN définissant une droite D passant par l'axe AA.

Les intersections de l'hélice formée par la surface de contact entre la gorge et le filet hélicoïdaux 18 et 30 avec les surfaces d'appui 20 et 36 déterminent entièrement les positions relatives de la carrure 10 et du fond 12. Ces intersections sont, concrètement, les origines respectivement de la gorge et du filet hélicoïdaux 18 et 30. On notera que ces origines peuvent être réelles ou virtuelles, la gorge et le filet hélicoïdaux 18 et 30 pouvant être interrompus avant de croiser les surfaces d'appui 20 et 36. Sur la figure 1, par exemple, le filet 30 ne coupe pas la surface d'appui 36. Cette configuration permet de stopper le vissage du fond 12 dans la carrure 10 sur les surfaces d'appui 20 et 36 et non pas à l'origine de la gorge et du filet hélicoïdaux 18 et 30. L'arrêt est ainsi plus précis, mais la position relative de la carrure 10 et du fond 12 n'en reste pas moins entièrement déterminée par les origines de la gorge et du filet hélicoïdaux 18 et 30.

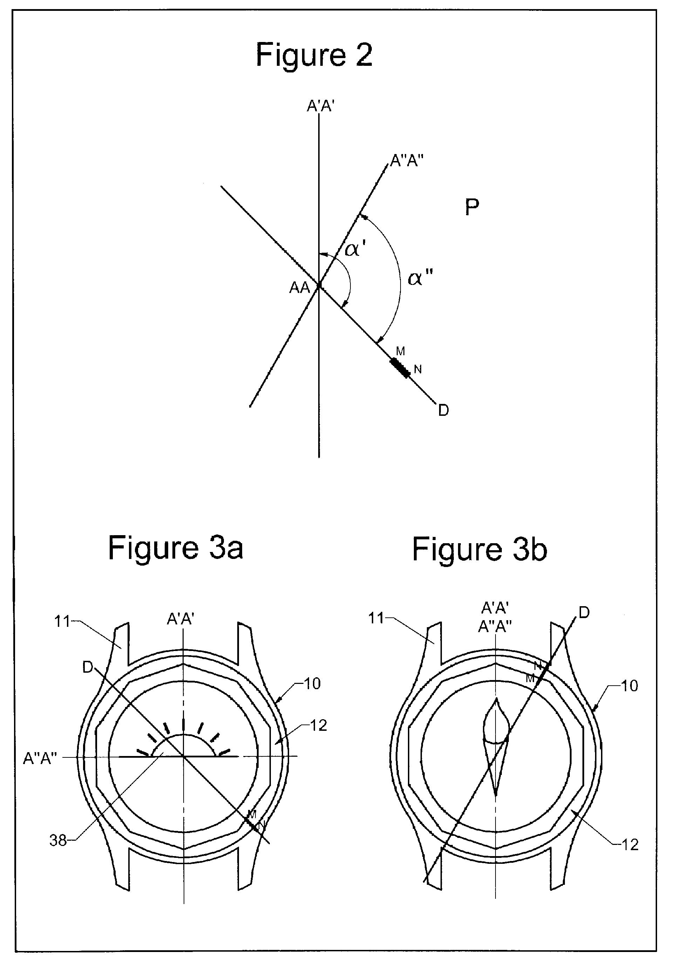

On se référera maintenant à la figure 2, représentant un plan géométrique P défini par les surfaces d'appui 20 et 36, perpendiculaire à l'axe AA et contenant la droite D. Deux axes de référence A'A' et A"A", respectivement par rapport à la carrure 10 et au fond 12, sont contenus dans le plan P. L'axe A'A' est confondu avec l'axe 12 heures - 6 heures de la carrure 10. Dans un autre mode de réalisation, il pourrait être confondu avec un quelconque diamètre de la carrure 10 présentant un avantage particulier. L'axe A"A" est un axe principal du motif 38 représenté sur le fond 12. Il peut être, par exemple, son axe longitudinal ou un quelconque de ses axes présentant un avantage particulier.

On définit α' et α" les angles formés par la droite D respectivement avec les axes de référence A'A' et A"A". Selon l'invention, la différence entre les angles α' et α" est parfaitement définie et est choisie de telle sorte que les axes A'A' et A"A" occupent des positions relatives définies. Il en résulte que la différence entre les angles α' et α" correspond à l'angle formé par les axes A'A' et A"A". Les positions relatives des axes A'A' et A"A" sont elles-mêmes choisies de manière à ce que le motif 38 ornant le fond 12 soit positionné angulairement par rapport à la carrure 10. La différence entre les angles α' et α" est donc définie pour un motif donné. En pratique, pour un ensemble de boîtes associé à un motif donné, les angles α' et α" prennent deux valeurs fixées, grâce à un procédé décrit ultérieurement. Il en résulte que, au sein d'un même ensemble, un fond 12 quelconque peut être vissé sur une carrure 10 quelconque, sans que l'orientation du motif 38 en soit affectée.

Les figures 3a et 3b illustrent deux exemples de boîtes de montre selon l'invention, vues de dessous. Sur la figure 3a, le motif 38 ornant le fond 12 est un coucher de soleil. La ligne d'horizon est choisie comme axe de référence A"A". L'axe de référence A'A' est l'axe 12 heures - 6 heures. Pour que le motif 38 soit positionné angulairement par rapport à la carrure, les axes A'A' et A"A" doivent être perpendiculaires. A cet effet, et dans cet exemple particulier, la droite D définie par le segment de droite MN fait un angle de 135° avec l'axe A'A' et un angle de 45° avec l'angle A"A". La différence entre les angles α' et α" vaut 90°, ce qui correspond bien à la position relative des axes A'A' et A"A". Bien entendu, tout autre couple de valeurs prises par α' et α" dont la différence vaut 90° conduirait au même résultat. Sur la figure 3b, le motif 38 ornant le fond 12 est un flambeau. Son axe longitudinal est choisi comme axe de référence A"A", tandis que l'axe de référence A'A' de la carrure 10 est l'axe 12 heures - 6 heures. Le flambeau est correctement orienté par rapport à la carrure 10 lorsque les deux axes de référence A'A' et A"A" sont alignés. A cet effet, et dans ce cas particulier, la droite D fait un angle de 30° avec les axes A'A' et A"A". La différence entre les angles α' et α" vaut 0°, ce qui correspond bien à l'alignement des deux axes de référence.

Outre un ensemble de boîtes de montre tel que décrit précédemment, l'invention concerne son procédé de fabrication, consistant à positionner angulairement les origines de la gorge et du filet hélicoïdaux 18 et 30 avec une grande précision par rapport aux axes A'A' et A"A" respectivement, et de façon identique pour tout l'ensemble. En pratique, positionner l'origine angulaire d'un filet par rapport à un axe déterminé, ne présente pas de difficulté particulière pour l'homme de métier, pour autant que la pièce à usiner dispose d'un organe de positionnement. Cet organe de positionnement est destiné à être disposé en appui sur une butée réglable angulairement, solidaire d'une pince montée sur un centre d'usinage tel qu'un tour, comme décrit par la suite.

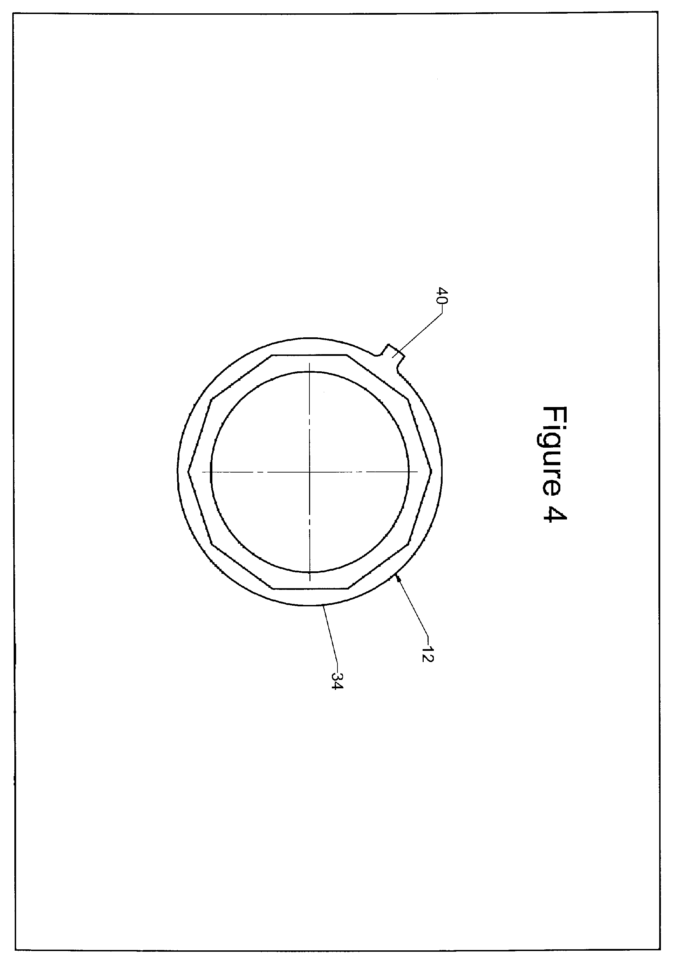

Pour ce qui est de la carrure 10, l'une des cornes 11 peut être choisie comme organe de positionnement. Selon l'invention, le fond 12 est, dans une étape intermédiaire, également muni d'un tel organe, destiné à être éliminé après l'étape de gravage de sa face inférieure. La figure 4 est une vue de dessus d'un fond 12 dans une telle étape intermédiaire de fabrication. Une protubérance 40, s'étendant radialement, est solidaire de l'épaulement circulaire 34 et fait office d'organe de positionnement du fond 12.

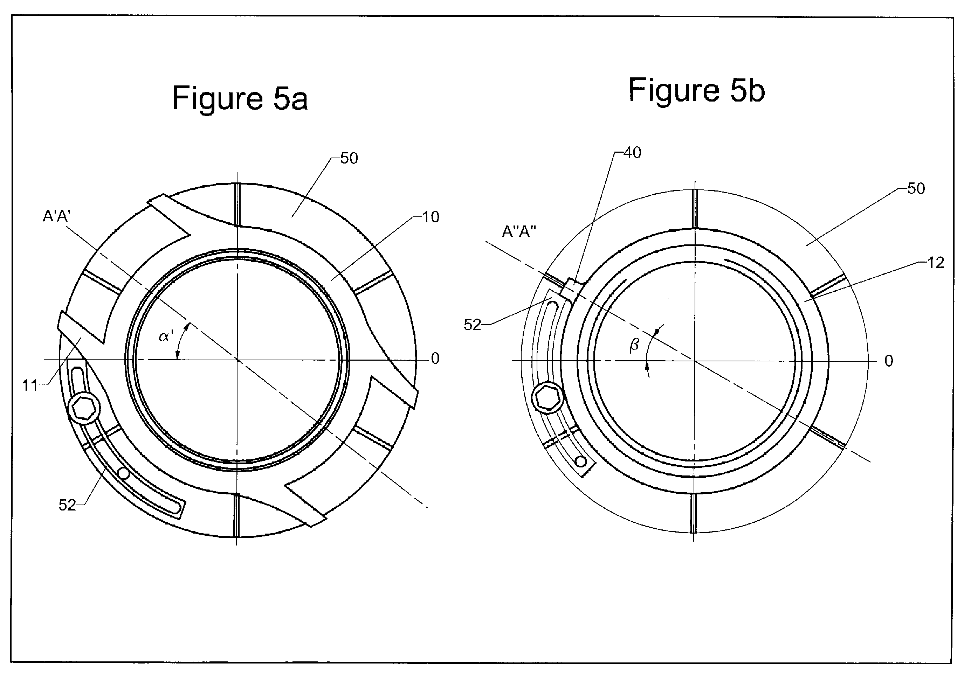

Les figures 5a et 5b illustrent le procédé de fabrication de la gorge et du filet hélicoïdaux 18 et 30, en référence aux axes A'A' et A"A", à l'aide des organes de positionnement 11 et 40. On relèvera que la réalisation d'une gorge découle directement de la réalisation d'un filet, et inversement. La présence de l'une est indissociable de la présence de l'autre.

Sur la figure 5a, une pince 50 montée sur un tour non représenté maintient une carrure intermédiaire 10 ayant, pour axe de référence A'A', l'axe 12 heures - 6 heures. La pince 50 est munie d'une butée 52 réglable angulairement disposée à sa périphérie. La position de la butée 52 coïncide avec la position zéro de la pince 50. La carrure intermédiaire 10 est en appui sur la butée 50 par sa corne 11 supérieure gauche. L'attaque de la gorge 18, à l'aide d'un outil, se fait au niveau, d'une part, à la surface d'appui 20 et, d'autre part, de la position zéro de la pince 50. En l'absence de capteur angulaire sur le tour, l'attaque de la gorge se fait à la position zéro de la pince 50. Dans le cas décrit, l'angle α' correspondant à l'angle entre l'origine de la gorge 18 et l'axe 12 heures - 6 heures vaut 30°. Il serait également possible, en modifiant la position de la butée 50, de donner une autre valeur, par exemple 0, à l'angle α'. Quelle qu'elle soit, la valeur choisie pour l'angle α' est fixée pour toute une série de boîtes. Lors de l'étape suivante, la valeur de α" est déterminée en fonction de la valeur de α'.

Sur la figure 5b, un fond intermédiaire 12 est monté sur la pince 50, la protubérance 40 étant disposée en appui sur la butée 50. Si le motif 38 n'est pas encore réalisé à ce stade de la fabrication, le diamètre passant par la protubérance 40 est choisi comme axe de référence A"A". Bien entendu, le motif 38 devra être réalisé, par la suite, en référence à cet axe A"A". Dans le cas opposé, le motif 38 existant définit un axe de référence A"A". En se plaçant dans le cas simple où les axes de références A'A' et A"A" doivent être alignés, l'angle α" doit valoir 30°. Si l'attaque du filet 30 se fait au niveau de la surface 36 et à la position zéro de la pince 50, la butée 52 doit être déplacée de 30° par rapport à cette position zéro. En pratique, il n'est pas possible d'attaquer le filet 30 directement sur la surface 36 car l'outil de coupe s'userait au contact de celle-ci. Une gorge circulaire 32 est donc réalisée avant le filet 30, et l'outil de coupe attaque le filet à une distance z, définie et fixe, de la surface 36. La butée 52 doit donc être déplacée d'une valeur indéterminée, tenant compte de la distance z et de la valeur initiale de 30°.

Théoriquement, il est possible de calculer le déplacement de la butée 52, connaissant la distance z et le pas du filet 30. En pratique, il est plus simple de procéder de la façon suivante. La position de la butée 52 n'est pas modifiée pour le premier fond 12 à usiner. Le filet est réalisé, puis le fond intermédiaire 12 est vissé sur l'une des carrures 10, et l'angle β entre les deux axes de référence A'A' et A"A" est mesuré. La butée 52 est ensuite déplacée de la valeur β mesurée, et les pièces suivantes sont usinées, la protubérance 40 étant en appui sur la butée 52. L'attaque du filet 30 se fait toujours au point zéro pour toute la série de boîtes. Ce mode de réalisation du filet 30, par attaque du filet à une distance z de la surface 36, introduit toutefois une erreur supplémentaire par rapport à un mode de réalisation par attaque directement au niveau de la surface d'appui, à savoir l'erreur sur la distance z. Par conséquent, cette cote doit être contrôlée avec un maximum de précision.

Dans le cas où le motif 38 n'existe pas encore à cette étape du procédé, il doit être réalisé en référence à l'axe A"A" défini par la protubérance 40, ce qui ne pose pas de difficulté particulière pour l'homme de métier. Puis, la protubérance 40 est éliminée et le fond 12 est monté sur la carrure 10. Pour une série donnée, quel que soit le fond 12 et la carrure 10 choisis, le motif 38 sera toujours aligné par rapport à la carrure 10.

Dans l'exposé qui précède, on a appelé origine de la gorge et du filet hélicoïdaux 18 et 30, leur point d'intersection avec les surfaces d'appui 20 et 36. Une précision maximale est obtenue pour le positionnement angulaire de ces origines, si l'attaque de la gorge et du filet hélicoïdaux 18 et 30 se fait sur les surfaces d'appui 20 et 36, ce qui n'est pas toujours possible. Même lorsqu'une telle possibilité existe, l'homme de métier pourrait être amené à attaquer le filetage à l'opposé de la surface d'appui. Par exemple, il pourra choisir d'attaquer la gorge hélicoïdale 18 du côté de la gorge circulaire 22. Cette méthode introduit néanmoins une erreur supplémentaire, à savoir l'erreur sur la distance du point d'attaque de l'outil à la surface d'appui 20. Cette cote doit donc être contrôlée avec un maximum de précision afin de minimiser l'erreur angulaire.

On notera par ailleurs, que le procédé de formation des gorges et filets hélicoïdaux 18 et 30 selon l'invention fait intervenir une butée réglable angulairement 52. En alternative, l'homme de métier pourrait choisir de remplacer la butée réglable angulairement 52 par une butée fixe associée à un capteur angulaire. Un tel capteur permet, en effet, de choisir un angle d'attaque quelconque en référence à la position zéro de la pince.

On relèvera enfin, que les rôles respectifs d'écrou et de vis de la carrure 10 et du fond 12 peuvent être inversés sans sortir du cadre de l'invention.

## Revendications

1. Ensemble de boîtes de montre comportant chacune une carrure (10) et un fond (12) définissant des surfaces d'appui (20, 36) respectives qui coopèrent l'une avec l'autre, ledit fond (12) et ladite carrure (10) constituant l'un une vis (28) munie d'un filet hélicoïdal (30), et l'autre un écrou (16) muni d'une gorge hélicoïdale (18), ce filet (30) et cette gorge (18) formant des surfaces de contact hélicoïdales qui coopèrent l'une avec l'autre et définissent des hélices déterminées par leurs origines respectives correspondant à leur intersection avec les surfaces d'appui (20, 36), **caractérisé en ce que** ladite carrure (10) et ledit fond (12) comportent, en outre, des axes de référence (A'A', A"A") destinés à occuper des positions relatives pré-définies fixes pour ledit ensemble, et **en ce que** lesdites origines sont confondues lorsque lesdits axes (A'A', A"A") occupent ces positions pré-définies.

2. Ensemble selon la revendication 1, **caractérisé en ce que** la surface extérieure du fond (12) est, en outre, ornée d'un motif (38) dont un axe principal est confondu avec son axe de référence (A"A").

3. Ensemble selon l'une des revendications 1 et 2, **caractérisé en ce que** la carrure (10) comporte, en outre, des cornes (40) définissant deux axes de symétrie, l'un de ces axes étant confondu avec son axe de référence (A'A').

4. Procédé de fabrication d'un ensemble de boîtes selon l'une des revendications 1 à 3, **caractérisé en ce qu'**il comporte les principales étapes suivantes :
• se munir d'un ensemble de carrures intermédiaires (10) comportant chacune une portion cylindrique (13), une surface d'appui (20) et un organe de positionnement angulaire (11), et d'un ensemble de fonds intermédiaires (12) comportant chacun une portion cylindrique (26), une surface d'appui (36) et un organe de positionnement angulaire (40),
• définir, pour les carrures (10), un axe de référence (A'A'), et, pour les fonds (12), un axe de référence (A"A"), les positions respectives de ces axes par rapport aux organes de positionnement (11, 40) étant déterminées et formant un angle pré-défini lorsque les boîtes sont fermées,
• former une gorge hélicoïdale (18) dans les portions cylindriques (13) des carrures (10), telle que la position angulaire, définie en référence à leurs axes (A'A'), de son intersection, au moins virtuelle, avec les surfaces d'appui (20) des carrures (10) est identique pour toutes les carrures (10) de l'ensemble, et
• former un filet hélicoïdal (30) dans les portions cylindriques (26) des fonds (12), tel que la position angulaire, définie en référence à leurs axes (A"A"), de son intersection, au moins virtuelle, avec les surfaces d'appui (36) des fonds (12) est identique pour tous les fonds (12) de l'ensemble et de sorte que les axes de référence (A'A', A"A") forment ledit angle pré-défini lorsque les boîtes sont fermées.

5. Procédé selon la revendication 4, **caractérisé en ce que** l'étape de formation d'une gorge hélicoïdale (18) dans les portions cylindriques (13) des carrures (10) comporte les principales étapes suivantes :
- se munir d'une pince (50) dotée d'une butée (52) réglable angulairement, montée sur un tour,
- positionner les carrures intermédiaires (10) dans cette pince (50), l'organe de positionnement (11) en appui sur la butée (52), et
- attaquer la gorge (18) en référence à la surface d'appui (20) de la carrure (10), et à une position zéro de la pince (50), de sorte que l'origine de la gorge (18) est située à un angle α' fixe de son axe (A'A'),
et **en ce que** l'étape de formation d'un filet hélicoïdal (30) dans les portions cylindriques (26) des fonds (12) comporte les principales étapes suivantes:
- se munir d'une pince (50) dotée d'une butée (52) réglable angulairement, montée sur un tour,
- positionner les fonds intermédiaires (12) dans cette pince (52), l'organe de positionnement (40) en appui sur la butée (52), et
- attaquer le filet (30) en référence à la surface d'appui (36) du fond (12), et à une position zéro de la pince (50), de sorte que l'origine du filet (30) est située à un angle α" fixe de son axe (A"A"), la différence entre les angles α' et α" correspondant audit angle pré-défini entre lesdits axes (A'A', A"A").

6. Procédé selon l'une des revendications 4 et 5, **caractérisé en ce qu'**il comporte, en outre, une étape de gravage d'un motif (38) sur la face inférieure du fond (12), ledit gravage étant réalisé en référence à son axe (A"A").
